(19) **Europäisches Patentamt / European Patent Office / Office européen des brevets**

(11) **EP 4 439 994 A1**

(12) # EUROPEAN PATENT APPLICATION
published in accordance with Art. 153(4) EPC

(43) Date of publication:
**02.10.2024 Bulletin 2024/40**

(21) Application number: **22895969.8**

(22) Date of filing: **11.11.2022**

(51) International Patent Classification (IPC):
**H04B 7/06** (2006.01)     **H04B 7/0456** (2017.01)
**H04B 17/309** (2015.01)     **H04W 28/02** (2009.01)
**H04W 24/08** (2009.01)     **H04W 24/10** (2009.01)
**H04W 72/04** (2023.01)     **G06N 20/00** (2019.01)

(52) Cooperative Patent Classification (CPC):
**G06N 20/00; H04B 7/0456; H04B 7/06;
H04B 17/309; H04W 24/08; H04W 24/10;
H04W 28/02; H04W 72/04**

(86) International application number:
**PCT/KR2022/017730**

(87) International publication number:
**WO 2023/090762 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.11.2021 KR 20210161038
03.08.2022 KR 20220096819**

(71) Applicant: **LG Electronics Inc.
Yeongdeungpo-gu
Seoul 07336 (KR)**

(72) Inventors:
- **PARK, Haewook**
  **Seoul 06772 (KR)**
- **KANG, Jiwon**
  **Seoul 06772 (KR)**
- **KIM, Seonwook**
  **Seoul 06772 (KR)**
- **CHUNG, Jaehoon**
  **Seoul 06772 (KR)**
- **KIM, Kyuseok**
  **Seoul 06772 (KR)**

(74) Representative: **Maikowski & Ninnemann
Patentanwälte Partnerschaft mbB
Postfach 15 09 20
10671 Berlin (DE)**

(54) **METHOD AND DEVICE FOR TRANSMITTING/RECEIVING WIRELESS SIGNAL IN WIRELESS COMMUNICATION SYSTEM**

(57)     A method and a device for transmitting/receiving a wireless signal in a wireless communication system are disclosed. A method by which a terminal reports channel state information (CSI), according to one embodiment of the present disclosure, may comprise the steps of: receiving, from a base station, configuration information related to a CSI report; receiving, from the base station, at least one CSI-reference signal (CSI-RS) on the basis of the configuration information; and transmitting, to the base station, a CSI calculated on the basis of the at least one CSI-RS. Here, the CSI can include a plurality of parameters according to the configuration information, and at least one of the plurality of parameters can be determined on the basis of a specific learning algorithm.

FIG.24

START

Receive configuration information related to CSI reporting — S2410

Receive at least one CSI-RS based on configuration information — S2420

Transmit CSI — S2430

END

**Description**

[Technical Field]

The present disclosure relates to a wireless communication system, and more particularly, to a method and a device for transmitting and receiving a wireless signal in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and a device for transmitting and receiving a wireless signal in a wireless communication system.

In addition, an additional technical object of the present disclosure is to provide a method and device for performing Artificial Intelligence (AI)/Machine Learning (ML)-based reporting in an evolved wireless communication system.

The technical objects to be achieved by the present disclosure are not limited to the above-described technical objects, and other technical objects which are not described herein will be clearly understood by those skilled in the pertinent art from the following description.

[Technical Solution]

A method for performing channel state information (CSI) reporting by a user equipment (UE) in a wireless communication system according to an aspect of the present disclosure may comprise: receiving, from a base station, configuration information related to the CSI reporting; receiving, from the base station, at least one CSI-reference signal (CSI-RS) based on the configuration information; and transmitting, to the base station, CSI calculated based on the at least one CSI-RS. Herein, the CSI may include a plurality of parameters according to the configuration information, and at least one parameter among the plurality of parameters may be determined based on a specific learning algorithm.

A method for receiving channel state information (CSI) reporting by a base station in a wireless communication system according to an aspect of the present disclosure may comprise: transmitting, to a user equipment (UE), configuration information related to the CSI reporting; transmitting, to the UE, at least one CSI-reference signal (CSI-RS) based on the configuration information; and receiving, from the UE, CSI calculated based on the at least one CSI-RS. Herein, the CSI may include a plurality of parameters according to the configuration information, and at least one parameter among the plurality of parameters may be determined based on a specific learning algorithm.

[Technical Effects]

According to an embodiment of the present disclosure, channel state measurement and channel state information reporting based on an evolved wireless communication system can be efficiently supported, and overall system flexibility may be improved through this.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of multiple TRPs transmission in a wireless communication system to which the present disclosure may be applied.
FIG. 8 is a diagram illustrating a downlink transmission and reception operation in a wireless communication system to which the present disclosure can be applied.
FIG. 9 is a diagram illustrating an uplink transmission and reception operation in a wireless communication system to which the present disclosure can be applied.
FIG. 10 illustrates a classification of artificial intelligence.
FIG. 11 illustrates a feed-forward neural network.
FIG. 12 illustrates a recurrent neural network.
FIG. 13 illustrates a convolutional neural network.
FIG. 14 illustrates an auto encoder.
FIG. 15 illustrates a functional framework for an AI operation.
FIG. 16 is a diagram illustrating split AI inference.
FIG. 17 illustrates an application of a functional framework in a wireless communication system.
FIG. 18 illustrates an application of a functional framework in a wireless communication system.
FIG. 19 illustrates an application of a functional framework in a wireless communication system.
FIG. 20 illustrates an antenna configuration and a port configuration in a panel in a wireless communication system to which the present disclosure may be applied.
FIG. 21 illustrates a spherical antenna layout in a wireless communication system to which the present disclosure may be applied.
FIG. 22 illustrates 2D bitmap information for reporting the direction and strength of a beam in a wireless communication system to which the present disclosure may be applied.
FIG. 23 illustrates AI/ML-based BSR information in a wireless communication system to which the present disclosure may be applied.
FIG. 24 is a diagram illustrating an operation of a user equipment for a method for reporting channel state information according to an embodiment of the present disclosure.
FIG. 25 is a diagram illustrating an operation of a base station for a method for reporting channel state information according to an embodiment of the present disclosure.
FIG. 26 illustrates a block configuration diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

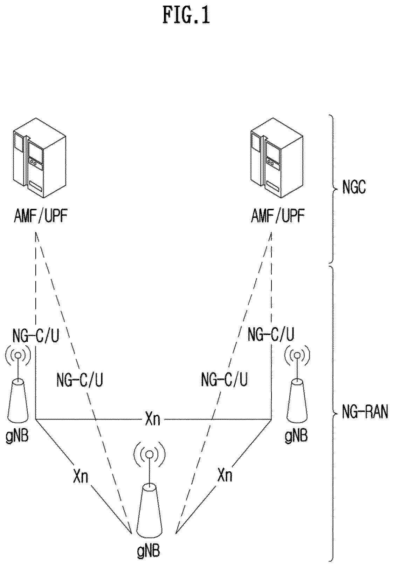

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

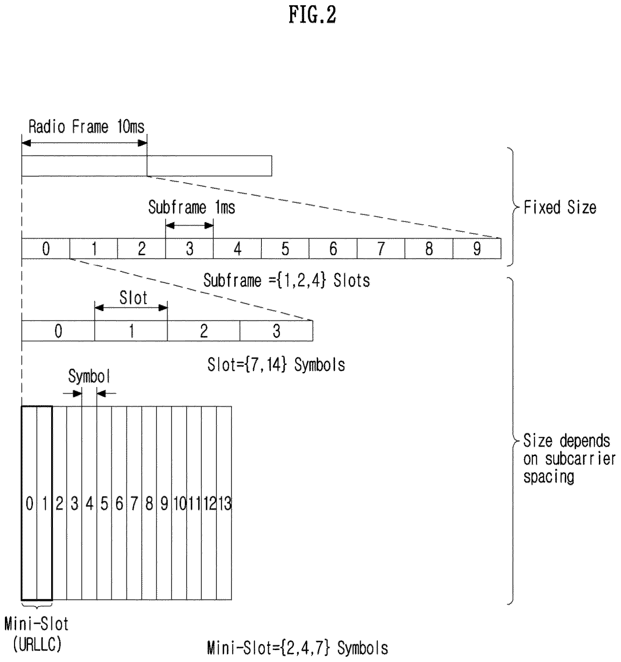

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max} N_f/100) \cdot T_c$=10ms. Here, a radio frame is configured with 10 subframes having a duration of $T_{sf}=(\Delta f_{max} N_f/1000) \cdot T_c$=1ms, respectively. In this case, there may be one set of frames for an uplink and one set of frames for a downlink. In addition, transmission in an uplink frame No. i from a terminal should start earlier by $T_{TA}= (N_{TA}+N_{TA,offset})T_c$ than a corresponding downlink frame in a corresponding terminal starts. For a subcarrier spacing configuration $\mu$, slots are numbered in an increasing order of $n_s^{\mu} \in \{0, ..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,u}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

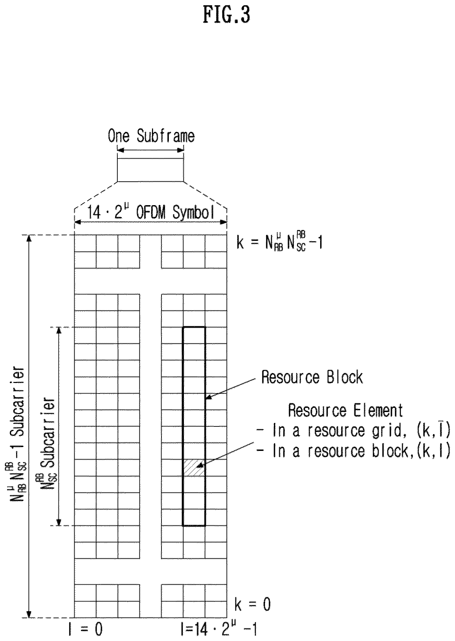

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,...,$N_{RB}^{\mu}N_{sc}^{RB}$-1 is an index in a frequency domain and l'=0,...,$2^{\mu}N_{symb}^{(\mu)}$-1 refers to a position of a symbol in a subframe. When referring to a resource element in a slot, an index pair (k,l) is used. Here, l=0,...,$N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu}= \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

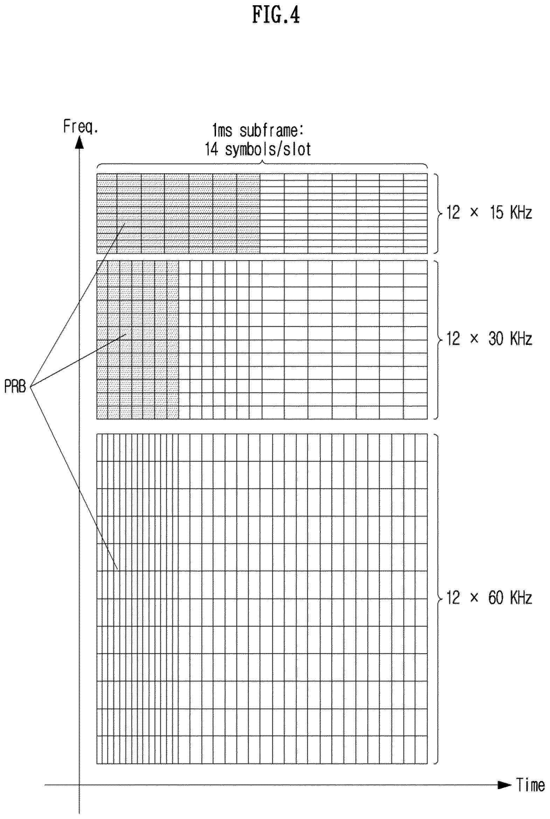

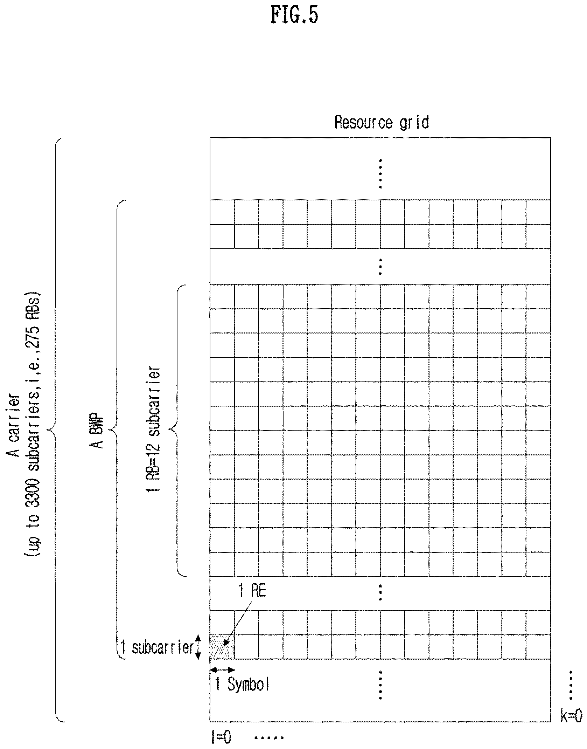

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

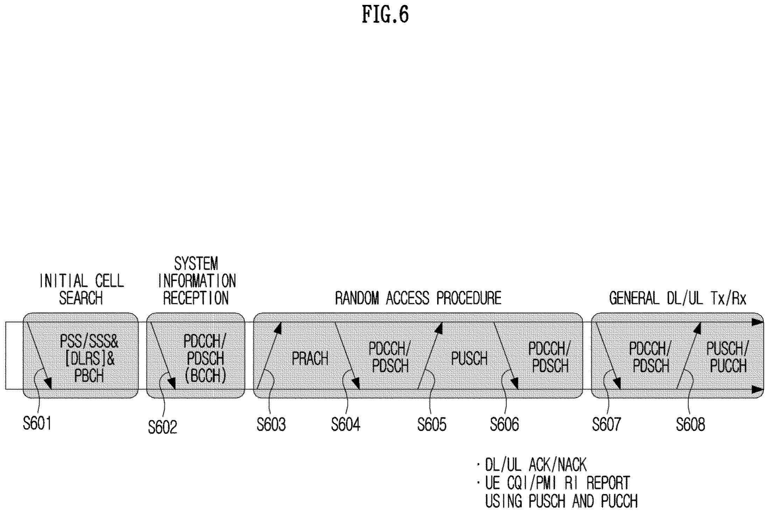

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

In addition, MTRP-URLLC may mean that a M TRPs transmit the same transport block(TB) by using different layer/time/frequency. A UE configured with a MTRP-URLLC transmission scheme receives an indication on multiple TCI state(s) through DCI and may assume that data received by using a QCL RS of each TCI state are the same TB. On the other hand, MTRP-eMBB may mean that M TRPs transmit different TBs by using different layer/time/frequency. A UE configured with a MTRP-eMBB transmission scheme receives an indication on multiple TCI state(s) through DCI and may assume that data received by using a QCL RS of each TCI state are different TBs. In this regard, as UE separately classifies and uses a RNTI configured for MTRP-URLLC and a RNTI configured for MTRP-eMBB, it may decide/determine whether the corresponding M-TRP transmission is URLLC transmission or eMBB transmission. In other words, when CRC masking of DCI received by UE is performed by using a RNTI configured for MTRP-URLLC, it may correspond to URLLC transmission, and when CRC masking of DCI is performed by using a RNTI configured for MTRP-eMBB, it may correspond to eMBB transmission.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex).

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

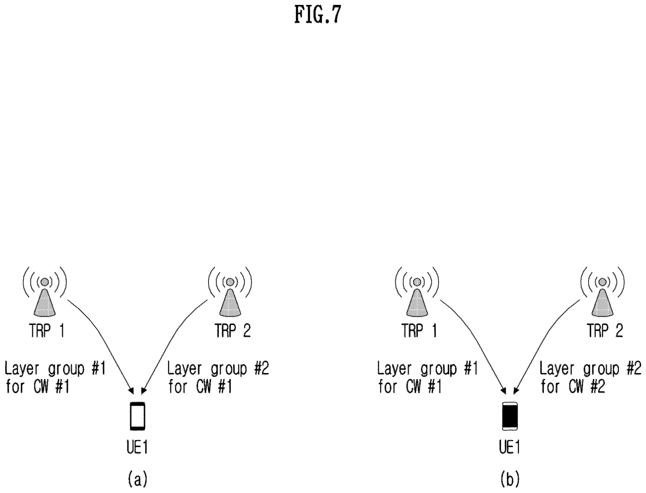

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

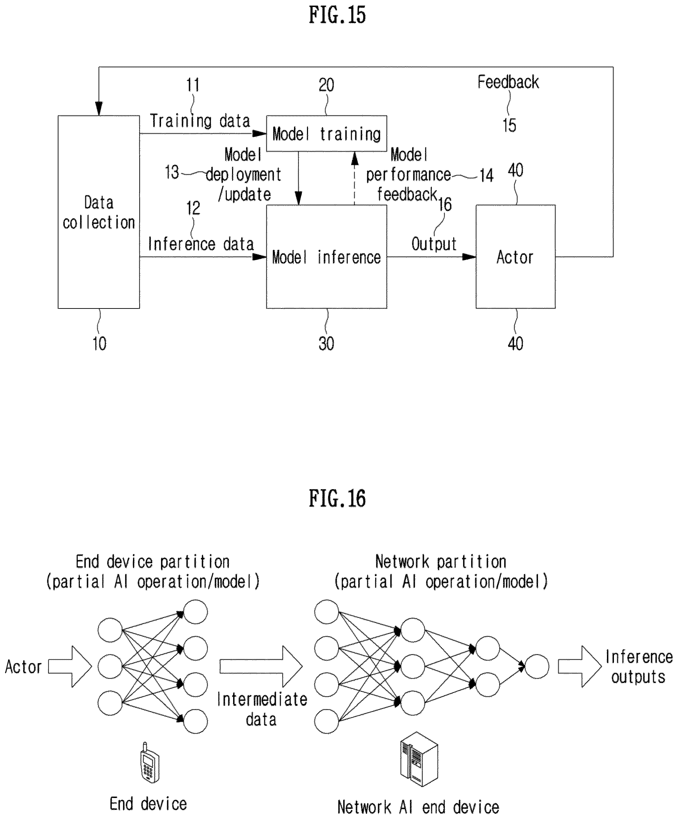

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 15(b), it may have a disadvantage that a code rate corresponding to a TB is higher compared to FIG. 15(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Downlink transmission and reception operation

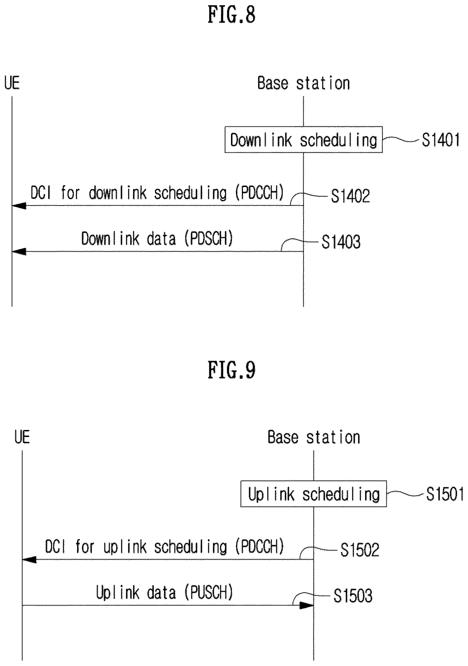

FIG. 8 is a diagram illustrating a downlink transmission and reception operation in a wireless communication system to which the present disclosure can be applied.

Referring to FIG. 8, a base station schedules downlink transmission such as a frequency/time resource, a transport layer, a downlink precoder, an MCS, etc. (S1401). In particular, a base station can determine a beam for PDSCH transmission to a UE through the operations described above.

A UE receives DCI for downlink scheduling (i.e., including scheduling information of a PDSCH) from a base station on a PDCCH (S1402).

DCI format 1_0, 1_1, or 1_2 may be used for downlink scheduling, and in particular, DCI format 1_1 includes the following information: an identifier for a DCI format, a bandwidth part indicator, a frequency domain resource assignment, a time domain resource assignment, a PRB bundling size indicator, a rate matching indicator, a ZP CSI-RS trigger, antenna port(s), a transmission configuration indication (TCI), an SRS request, a DMRS (Demodulation Reference Signal) sequence initialization

In particular, a number of DMRS ports may be scheduled according to each state indicated in an antenna port(s) field, and also single-user (SU)/multi-user (MU) user transmission scheduling is possible.

In addition, a TCI field is composed of 3 bits, and a QCL for a DMRS is dynamically indicated by indicating up to 8 TCI states according to a TCI field value.

A UE receives downlink data from a base station on a PDSCH (S1403).

When a UE detects a PDCCH including DCI formats 1_0, 1_1, and 1_2, it decodes a PDSCH according to indications by corresponding DCI.

Here, when a UE receives a PDSCH scheduled by DCI format 1, a DMRS configuration type may be configured for the UE by a higher layer parameter 'dmrs-Type', and a DMRS type is used to receive a PDSCH. In addition, a maximum number of front-loaded DMRA symbols for the PDSCH may be configured for a terminal by a higher layer parameter 'maxLength'.

For DMRS configuration type 1, if a single codeword is scheduled for a UE and an antenna port mapped to an index of {2, 9, 10, 11 or 30} is indicated or if a single codeword is scheduled and an antenna port mapped to an index of {2, 9, 10, 11 or 12} or {2, 9, 10, 11, 30 or 31} is indicated, or if two codewords are scheduled, the UE assumes that all remaining orthogonal antenna ports are not associated with PDSCH transmission to another UE.

Alternatively, for DMRS configuration type 1, if a single codeword is scheduled for a UE and an antenna port mapped to an index of {2, 10 or 23} is indicated, or if a single codeword is scheduled and an antenna port mapped to an index of {2, 10, 23 or 24} or {2, 10, 23 or 58} is indicated, or if two codewords are scheduled for a UE, the UE assumes that all remaining orthogonal antenna ports are not associated with PDSCH transmission to another UE.

When a UE receives a PDSCH, a precoding unit (precoding granularity) P' may be assumed to be a contiguous resource block in a frequency domain. Here, P' may correspond to one of {2, 4, wideband}.

If P' is determined to be wideband, a UE does not expect to be scheduled with non-contiguous PRBs, and a UE can assume that the same precoding is applied to allocated resources.

On the other hand, if P' is determined to be one of {2, 4}, a precoding resource block group (PRG) is divided into P' consecutive PRBs. An actual number of consecutive PRBs in each PRG may be one or more. A UE may assume that the same precoding is applied to consecutive downlink PRBs within a PRG.

In order for a UE to determine a modulation order, a target code rate, and a transport block size in a PDSCH, the UE first reads a 5-bit MCD field in DCI and determines a modulation order and a target code rate. Then, the UE reads a redundancy version field in the DCI and determines a redundancy version. Then, a UE determines a transport block size using a number of layers and a total number of allocated PRBs before rate matching.

Uplink transmission and reception operation

FIG. 9 is a diagram illustrating an uplink transmission and reception operation in a wireless communication system to which the present disclosure can be applied.

Referring to FIG. 9, a base station schedules uplink transmission such as a frequency/time resource, a transport layer, an uplink precoder, an MCS, etc. (S1501). In particular, a base station can determine a beam for PUSCH transmission to a UE through the operations described above.

A UE receives DCI for uplink scheduling (i.e., including scheduling information of a PUSCH) from a base station on a PDCCH (S1502).

DCI format 0_0, 0_1, or 0_2 may be used for uplink scheduling, and in particular, DCI format 0_1 includes the following information: an identifier for a DCI format, a UL/SUL (supplementary uplink) indicator, a bandwidth part indicator, a frequency domain resource assignment, a time domain resource assignment, a frequency hopping flag, a modulation and coding scheme (MCS), an SRS resource indicator (SRI), precoding information and number of layers, antenna port(s), an SRS request, a DMRS sequence initialization, a UL-SCH (Uplink Shared Channel) indicator

In particular, SRS resources configured in an SRS resource set associated with the higher upper layer parameter 'usage' may be indicated by an SRS resource indicator field. Additionally, the 'spatialRelationInfo' can be configured for each SRS resource, and its value can be one of {CRI, SSB, SRI}.

A UE transmits uplink data to a base station on a PUSCH (S1503).

When a UE detects a PDCCH including DCI formats 0_0, 0_1, and 0_2, it transmits a PUSCH according to indications by corresponding DCI.

Two transmission methods are supported for PUSCH transmission: codebook-based transmission and non-codebook-based transmission:

i) When the higher layer parameter 'txConfig' is set to 'codebook', a UE is configured to codebook-based transmission. On the other hand, when the higher layer parameter 'txConfig' is set to 'nonCodebook', a UE is configured to non-codebook based transmission. If the up higher per layer parameter 'txConfig' is not set, a UE does not expect to be scheduled by DCI format 0_1. When a PUSCH is scheduled by DCI format 0_0, PUSCH transmission is based on a single antenna port.

For codebook-based transmission, a PUSCH may be scheduled in DCI format 0_0, DCI format 0_1, DCI format 0_2, or semi-statically. If this PUSCH is scheduled by DCI format 0_1, a UE determines a PUSCH transmission precoder based on an SRI, a TPMI (Transmit Precoding Matrix Indicator), and a transmission rank from DCI, as given by an SRS resource indicator field and a precoding information and number of layers field. A TPMI is used to indicate a precoder to be applied across antenna ports, and corresponds to an SRS resource selected by an SRI when multiple SRS resources are configured. Alternatively, if a single SRS resource is configured, a TPMI is used to indicate a precoder to be applied across antenna ports and corresponds to that single SRS resource. A transmission precoder is selected from an uplink codebook having the same number of antenna ports as the higher layer parameter 'nrofSRS-Ports'. When a UE is configured with the higher layer parameter 'txConfig' set to 'codebook', the UE is configured with at least one SRS resource. An SRI indicated in slot n is associated with the most recent transmission of an SRS resource identified by the SRI, where the SRS resource precedes a PDCCH carrying the SRI (i.e., slot n).

ii) For non-codebook based transmission, a PUSCH may be scheduled in DCI format 0_0, DCI format 0_1, or semi-statically. When multiple SRS resources are configured, a UE can determine a PUSCH precoder and a transmission rank based on a wideband SRI, where, the SRI is given by an SRS resource indicator in DCI or by the higher layer parameter 'srs-ResourceIndicator'. A UE uses one or multiple SRS resources for SRS transmission, where the number of SRS resources can be configured for simultaneous transmission within the same RB based on a UE capability. Only one SRS port is configured for each SRS resource. Only one SRS resource can be configured with the higher layer parameter 'usage' set to 'nonCodebook'. The maximum number of SRS resources that can be configured for non-codebook based uplink transmission is 4. An SRI indicated in slot n is associated with the most recent transmission of an SRS resource identified by the SRI, where the SRS transmission precedes a PDCCH carrying the SRI (i.e., slot n).

CSI-related Operation

In an NR (New Radio) system, a CSI-RS(channel state information-reference signal) is used for time and/or frequency tracking, CSI computation, L1(layer 1)-RSRP(reference signal received power) computation and mobility. Here, CSI computation is related to CSI acquisition and L1-RSRP computation is related to beam management (BM).

CSI(channel state information) collectively refers to information which may represent quality of a radio channel (or also referred to as a link) formed between a terminal and an antenna port.

- To perform one of the usages of a CSI-RS, a terminal (e.g., user equipment, UE) receives configuration information related to CSI from a base station (e.g., general Node B, gNB) through RRC(radio resource control) signaling.

The configuration information related to CSI may include at least one of information related to a CSI-IM (interference management) resource, information related to CSI measurement configuration, information related to CSI resource configuration, information related to a CSI-RS resource or information related to CSI report configuration.

i) Information related to a CSI-IM resource may include CSI-IM resource information, CSI-IM resource set information, etc. A CSI-IM resource set is identified by a CSI-IM resource set ID (identifier) and one resource set includes at least one CSI-IM resource. Each CSI-IM resource is identified by a CSI-IM resource ID.

ii) Information related to CSI resource configuration may be expressed as CSI-ResourceConfig IE. Information related to a CSI resource configuration defines a group which includes at least one of an NZP(non zero power) CSI-RS resource set, a CSI-IM resource set or a CSI-SSB resource set. In other words, the information related to a CSI resource configuration may include a CSI-RS resource set list and the CSI-RS resource set list may include at least one of a NZP CSI-RS resource set list, a CSI-IM resource set list or a CSI-SSB resource set list. A CSI-RS resource set is identified by a CSI-RS resource set ID and one resource set includes at least one CSI-RS resource. Each CSI-RS resource is identified by a CSI-RS resource ID.

Parameters representing a usage of a CSI-RS (e.g., a 'repetition' parameter related to BM, a 'trs-Info' parameter related to tracking) may be configured per NZP CSI-RS resource set.

iii) Information related to a CSI report configuration includes a report configuration type (reportConfigType) parameter representing a time domain behavior and a report quantity (reportQuantity) parameter representing CSI-related quantity for a report. The time domain behavior may be periodic, aperiodic or semi-persistent.

- A terminal measures CSI based on the configuration information related to CSI.

The CSI measurement may include (1) a process in which a terminal receives a CSI-RS and (2) a process in which CSI is computed through a received CSI-RS and detailed description thereon is described after.

For a CSI-RS, RE(resource element) mapping of a CSI-RS resource in a time and frequency domain is configured by higher layer parameter CSI-RS-ResourceMapping.

- A terminal reports the measured CSI to a base station.

In this case, when quantity of CSI-ReportConfig is configured as 'none (or No report)', the terminal may omit the report. But, although the quantity is configured as 'none (or No report)', the terminal may perform a report to a base station. When the quantity is configured as 'none', an aperiodic TRS is triggered or repetition is configured. In this case, only when repetition is configured as 'ON', a report of the terminal may be omitted.

Artificial Intelligence (AI) operation

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.

AI-related descriptions and operations described below may be supplemented to clarify technical characteristics of methods proposed in the present disclosure described later.

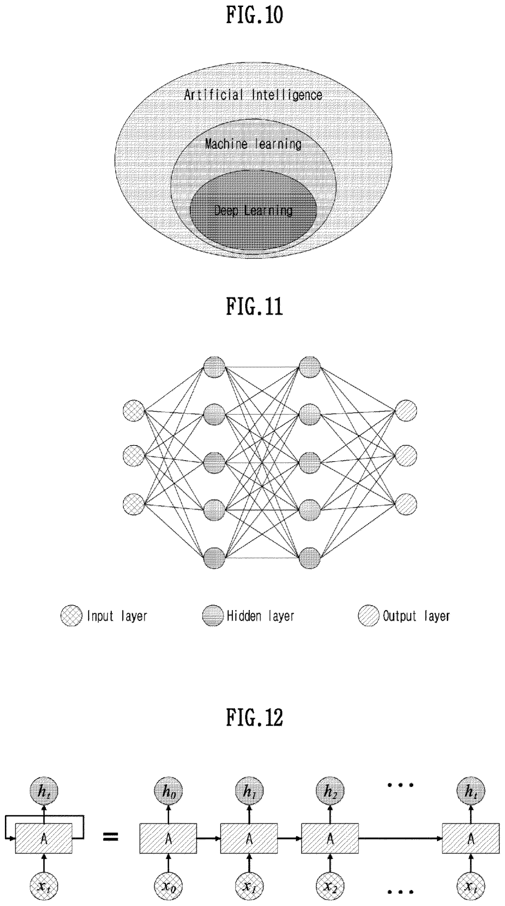

FIG. 10 illustrates a classification of artificial intelligence.

Referring to FIG. 10, artificial intelligence (AI) corresponds to all automation in which machines can replace work that should be done by humans.

Machine Learning (ML) refers to a technology in which machines learn patterns for decision-making from data on their own without explicitly programming rules.

Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs).

AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, RAN, network nodes, etc.) that can perform tasks like humans.

AI (or AI/ML) can be classified according to various criteria as follows.

1. Offline/online learning

a) Offline Learning

Offline learning follows a sequential procedure of database collection, learning, and prediction. In other words, collection and learning can be performed offline, and the completed program can be installed in the field and used for prediction work.

b) Online Learning

It refers to a method of gradually improving performance through incremental additional learning with additionally generated data by utilizing a fact that data which may be utilized for recent learning is continuously generated through the Internet. Learning is performed in real time in a (bundle) unit of specific data collected online, allowing the system to quickly adapt to changing data changing.

Only online learning may be used to build an AI system and learning may be performed only with data generated in real time, or after offline learning is performed by using a predetermined data set, additional learning may be performed by using real-time data generated additionally (online+offline learning).

2. Classification according to AI/ML Framework concept

a) Centralized Learning

In centralized learning, training data collected from a plurality of different nodes is reported to a centralized node, all data resources/storage/learning (e.g., supervised learning, unsupervised learning, reinforcement learning, etc.) are performed in one centralized node.

b) Federated Learning

Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.

c) Distributed Learning

Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression
- Instance-based Algorithms: k-Nearest Neighbor (KNN)
- Decision Tree Algorithms: Classification and Regression Tree (CART)

- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM).

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.

- Model-based reinforcement learning: refers to RL algorithm that uses a prediction model. Using a model of the various dynamic states of the environment and which states lead to rewards, the probabilities of transitions between states are obtained.
- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. non-policy RL, etc.
Hereinafter, representative models of deep learning will be exemplified.
FIG. 11 illustrates a feed-forward neural network.
A feed-forward neural network (FFNN) is composed of an input layer, a hidden layer, and an output layer.
In FFNN, information is transmitted only from the input layer to the output layer, and if there is a hidden layer, it passes through it.
Potential parameters that may be considered in relation to FNNN are as follows.

- Category 1: Number of neurons in each layer, number of hidden layers, activation function of each layer/neuron
- Category 2: Weight and bias of each layer/neuron
- Category 3: loss function, optimizer

As an example, Category 1, Category 2, and Category 3 may be considered in terms of training, and Category 1 and Category 2 may be considered in terms of inference.
FIG. 12 illustrates a recurrent neural network.
A recurrent neural network (RNN) is a type of artificial neural network in which hidden nodes are connected to directed edges to form a directed cycle. This model is suitable for processing data that appears sequentially, such as voice and text.

In FIG. 12, A represents a neural network, xt represents an input value, and ht represents an output value. Here, ht may refer to a state value representing the current state based on time, and ht-1 may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

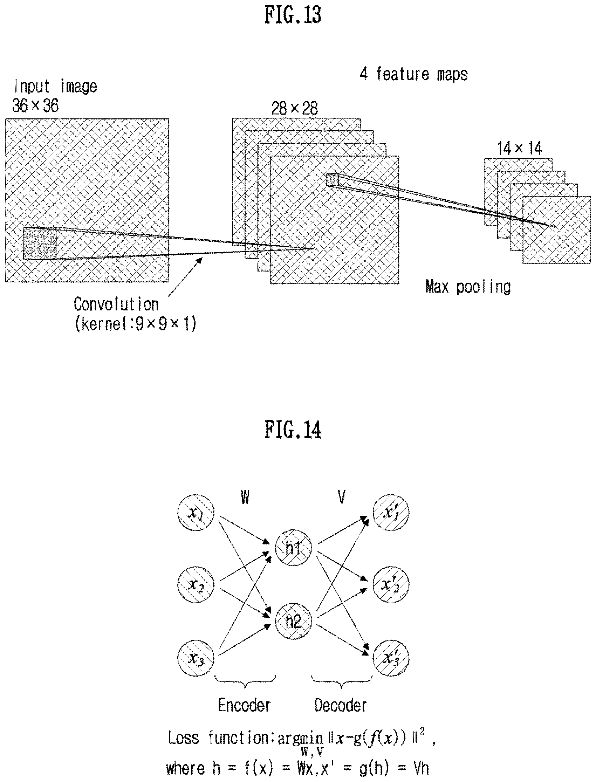

FIG. 13 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying the kernel to input. Several feature maps can be extracted to ensure robustness to distortion, change, etc.
- Padding: refers to a value added to adjust the size of the feature map.
- Pooling: refers to an operation (e.g., max pooling, average pooling) to reduce the size of the feature map by downsampling the feature map.

Potential parameters that may be considered in relation to CNN are as follows.

- Category 1: Structural information of each layer (e.g., number of hidden layers, padding presence/value, pooling presence/type, etc.)
- Category 2: Size/weight of kernel, activation function/stride of each layer/kernel, bias of each layer/kernel
- Category 3: loss function, optimizer

As an example, Category 1, Category 2, and Category 3 may be considered in terms of training, and Category 1 and Category 2 may be considered in terms of inference.

FIG. 14 illustrates an auto encoder.

Auto encoder refers to a neural network that receives a feature vector x (x1, x2, x3, ...) as input and outputs the same or similar vector x' (x'1, x'2, x'3, ...)'.

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 14 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.
- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

FIG. 15 illustrates a functional framework for an AI operation.

Referring to Figure 15, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 15 may be implemented in a RAN node (e.g., base station, TRP, base station central unit (CU), etc.), a network node, a network operator's operation administration maintenance (OAM), or a UE.

Alternatively, the function illustrated in FIG. 15 may be implemented through cooperation of two or more entities among a RAN, a network node, an CAM of network operator, or a UE. For example, one entity may perform some of the functions of FIG. 15 and other entities may perform the remaining functions. As such, as some of the functions illustrated in FIG. 15 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment/Update (13) and Model Performance Feedback (14) can be omitted.

Alternatively, any one of the functions illustrated in FIG. 15 may be performed through collaboration between two or more entities among a RAN, a network node, an CAM of a network operator, or a UE. This can be referred to as a split AI operation.

FIG. 16 is a diagram illustrating split AI inference.

FIG. 16 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energy-intensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

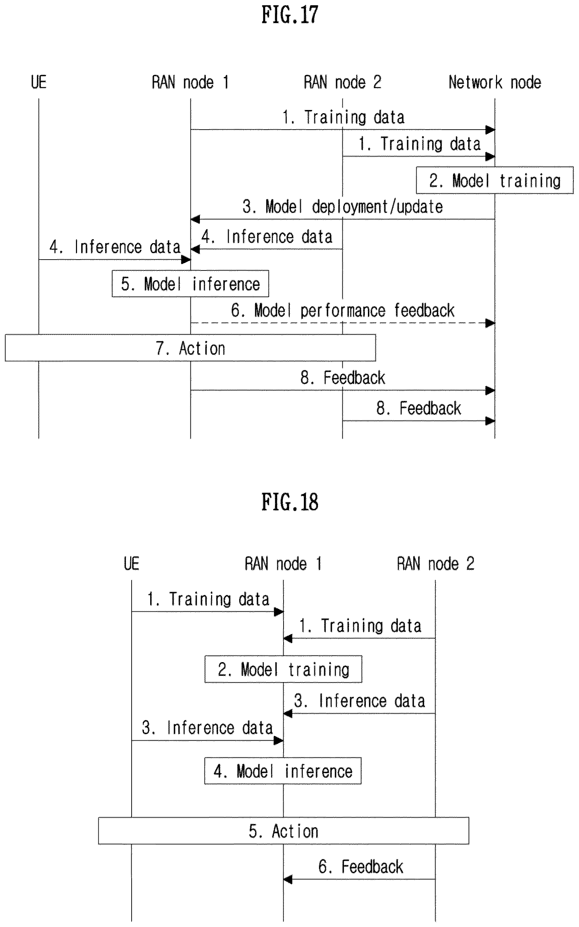

FIG. 17 illustrates an application of a functional framework in a wireless communication system.

FIG. 7 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 18 illustrates an application of a functional framework in a wireless communication system.

FIG. 18 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

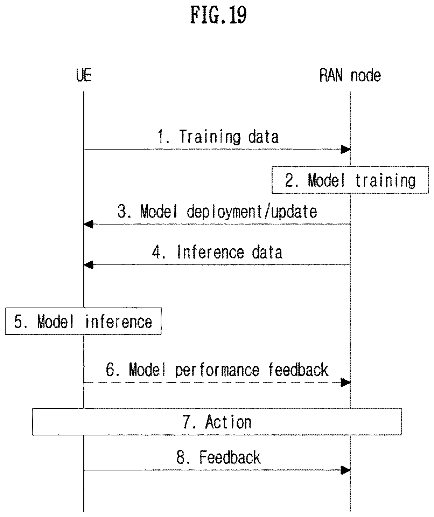

FIG. 19 illustrates an application of a functional framework in a wireless communication system.

FIG. 19 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs).

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

AI/ML-based CSI reporting method

In this disclosure, the description is based on the 3GPP NR system, but this is not a limitation, and it is obvious that the invention technology may be applied to other communication systems.

Due to the development of computational processing technology and AI (artificial intelligence)/ML (machine learning) technology, the nodes and terminals that make up the wireless communication network are becoming more intelligent/advanced.

In particular, due to the intelligence of networks/base stations, various environmental parameters (e.g., distribution/location of base stations, distribution/location/material of buildings/furniture, etc., location/movement direction/speed of UEs, climate information, etc.), various network/base station decision parameter values may be quickly optimized and derived/applied. For example, transmission and reception power of each base station, transmission power of each terminal, base station/UE precoder/beam, time/frequency resource allocation for each UE, and the duplex method of each base station may be quickly optimized. In this environment, the network may quickly control/adjust interference to each UE according to environmental parameters that change in real time.

In addition, in order to control specific interference and improve network yield according to the environmental parameters of the network, the network (e.g., base station) may receive more sophisticated (and/or concise) CSI measurements and results from the UE, or channel information between the base station and the UE may be predicted through another RS (e.g., SRS, etc.).

In existing wireless communication systems, channel estimation and precoder/beam decision methods by the base station may be broadly divided into open loop and closed loop methods. For the open-loop method, the base station does not acquire channel information from the UE, the base station supports the UE transparently with a diversity scheme such as cyclic delay diversity (CDD) or precoder cycling.

In contrast, in the case of the closed-loop method, the UE measures the channel based on CSI-RS, etc. reports the measured results to the base station, and typically, explicit feedback reporting methods and implicit feedback reporting methods are considered. Here, the explicit feedback reporting method means that the UE feeds back the channel matrix itself, and the implicit feedback reporting method is a method of expressing/calculating channel properties in terms of channel quality indicator (CQI), precoding matrix indicator (PMI), rank indicator (RI), etc. and reporting them to the base station.

In a wireless communication system, Type I CSI feedback related to single user (SU)-MIMO and Type II CSI feedback related to multi user (MU)-MIMO are supported.

Here, Type I CSI feedback is based on a codebook based on discrete fourier transform (DFT) vector selection considering the spatial domain, and the payload and/or overhead associated with this may be small.

On the other hand, Type II CSI feedback is based on a codebook that may perform more sophisticated channel reporting by linear combining DFT vectors in the spatial domain, and the payload and/or overhead associated with this may be very large.

In a wireless communication system, in order to reduce the payload for the above-described Type II CSI feedback, a feedback method that considers not only the spatial domain but also the frequency domain was introduced. Specifically, when performing channel reporting for each unit in the frequency domain (e.g., subband), payload may be reduced by reporting the channels by reflecting the correlation properties of channels in the frequency domain as DFT vectors in the frequency domain.

In the present disclosure, the description is based on the 3GPP NR system, but this is not a limitation, and it is obvious that the invention technology may be applied to other communication systems.

The following are two examples of operation scenarios through network/base station AI.

The input for AI illustrated below may correspond to the Training Data and/or Inference Data, and the output for the AI may correspond to the output of Model Inference.

1) Network/base station (gNB) AI operation scenario Example #1

- Input for AI: Location/distribution of UEs in the network/base station, Required traffic, Information related to location movement (e.g., UEs moving along a certain route like a train, fixed UEs with little probability of location change, etc.), Uplink reception channel/RS (e.g., PUCCH, PUSCH, SRS, UL-DMRS, etc.)
- Output for AI: Changes in location/distribution of UEs, Changes in required traffic patterns, and Predicted values for channel information

The network/base station may may determine a short/mid-term time/frequency/space resource allocation method, interference control/adjustment method, and/or precoder/beamformer for the UEs, based on the prediction value and the capability information of each UE (e.g., whether it has an interference cancellation reception function), etc.

2) Network/base station (gNB) and/or UE AI operation scenario Example #2

- Input for AI (network/base station): Location/distribution of UEs in the network/base station, Required traffic, Information related to location movement (e.g., UEs moving along a certain route like a train, fixed UEs with little probability of location change, etc.), Feedback information received from the UE
- Output for AI (Network/base station): Changes in location/distribution of UEs, Changes in required traffic patterns, and Predicted values for channel information (e.g., current and/or future channel information)
- Input for AI (UE): Channel information estimated by the UE in the past, Channel information estimated from RS transmitted by the base station (e.g., SSB, CSI-RS, DM-RS, PT-RS, TRS, etc.) and transmission information from the base station (e.g. number of antennas/panel ports, power information, QCL, etc.)
- Output for AI (UE): (simplified) current and/or future channel estimation information

The network/base station may predict the current and/or future channel information of the UE based on the prediction value, capability information of each UE (e.g., whether it has an interference cancellation reception function), and information reported from the UE. Additionally, the network/base station may determine a short/mid-term time/frequency/space resource allocation method, interference control/adjustment method, and/or precoder/beamformer, etc., by using predicted channel information.

In relation to channel state information reporting (CSI reporting) proposed in the present disclosure, the base station and UE may configure input and output based on an auto encoder. Here, the auto encoder is a neural network that receives a feature vector x as input and outputs the same or similar vector x'. Auto encoder is meaningful when the number of hidden nodes (h) is smaller than the number of input layers, and may be used for image compression, classification, regression, etc.

For example, Sparse auto encoder (SAE) is interested in the output h of the hidden layer and has a regulation effect by forcing h to be sparse. Denoising auto encoder (DAE) and Contractive auto encoder (CAE) have the characteristic of keeping the output of the hidden layer, that is, the extracted feature vector, as constant as possible even if the input changes slightly. DAE uses a method of adding noise and then finding the original pattern without the noise, but CAE uses a method of making the differential value of the encoder function small.

In the present disclosure, when AI/ML as described above is introduced into a wireless communication system, methods for effective operation of a UE and/or base station are described. Specifically, the present disclosure proposes methods for efficiently performing AI/ML-based reporting.

Embodiment 1

This embodiment relates to a method of configuring/defining a separate reporting method for AI/ML-based training and/or inference.

In this embodiment, in addition to the CSI for the CSI reporting purpose of the UE, a method of defining a separate report for AI/ML-based training or inference purposes (of the base station) is proposed. Here, the separate report is configured to distinguish it from CSI for existing CSI reporting purposes. As an example, CSI configured for CSI reporting for inference purposes (e.g. CSIreportingInference) may include relatively imprecise CSI values (e.g., coarse values in terms of time/frequency/space) for existing CSI reporting purposes (hereinafter referred to as coarse values).

For example, in NR wireless communication system, Type I CSI codebook and/or Type II CSI codebook may be applied in relation to CSI reporting. The two codebooks may be used to report a precoding matrix indicator (PMI) based on a dual stage structure (e.g., W=W1*W2).

Specifically, Type I CSI codebook may correspond to a method of selecting one or more spatial domain indices (e.g., DFT vector index, port index) selected using the W1 matrix using the W2 matrix, or performing co-phase processing.

From here, In-phase processing may mean an operation of adjusting by applying the spatial domain component (e.g. DFT vector) for the '/' slant and the phase for the spatial domain component for the '\' slant to fit, by considering the shape of the cross-polarization antenna of the base station.

On the other hand, Type II CSI codebook may correspond to a method of reporting relatively sophisticated channel information by combining one or more spatial domain indices selected using W1 using the W2 matrix.

In this embodiment, when using the above-described Type I CSI codebook or Type II CSI codebook for AI/ML-based training or inference purposes, a method of reporting only one specific matrix among the codebooks of the dual stage structure (hereinafter, Example 1-1) and a method of fixing one matrix in advance and reporting the remaining matrices as coarse values (hereinafter, Example 1-2) will be proposed.

(Example 1-1) For example, for AI/ML-based training or inference purposes, when using the Type I CSI codebook or Type II CSI codebook described above, a method of reporting only the W1 matrix among the codebooks of the corresponding dual stage structure may be considered.

In this case, the UE terminal may report only the spatial domain parameter index associated with the W1 matrix. In order to transfer relatively accurate/a lot of information to the base station, the UE may combine information on the corresponding W1 matrix with RI/CQI, etc., and may report it by including it in part 1 CSI. In the existing reporting method (i.e., the existing CSI reporting method), the index was included and reported in part 2 CSI, considering that the size of the index of the W1 matrix may change depending on the RI value.

Unlike the existing reporting method described above, in order to include information on the W1 matrix in part 1 CSI, information on the W1 matrix may have a fixed payload based on pre-arranged parameter values or parameter values configured by the base station. As an example, only the number of preferred spatial area indices to be reported by the UE is configured, and the UE may be configured/defined to report information based on this.

As a specific example, in the case of 8-port CSI-RS, consider the case where a DFR vector of length 4 is used assuming cross-pol and oversampling is 4. At this time, the number of DFT vectors that the UE may select in the spatial domain may be a total of 16 (i.e., 4*4). If the base station pre-configures (to the UE) the number of preferred beams (e.g. L) to 2, the UE may report one index among 120 candidate values (e.g., 16 choose 2 = 16*15/2).

(Example 1-2) For another example, for AI/ML-based training or inference purposes, when using the Type I CSI codebook or Type II CSI codebook described above, a method in which the W1 matrix among the codebooks of the corresponding dual stage structure is fixed in advance may be considered. Here, the meaning that the W1 matrix is fixed in advance may be interpreted to mean that the number and/or index of the DFT vectors constituting the corresponding W1 matrix are determined in advance.

In this case, the UE may report a set of parameters associated with W2 to the base station, and the corresponding parameter set may be configured/indicated separately from the parameter set for the existing Type I CSI codebook or Type II CSI codebook. For example, the corresponding parameter set may be a parameter set configured to a coarse value compared to the existing method.

Here, the corresponding parameter set may be configured/provided separately through RRC configuration/signaling. As an example, the parameter set may include all or part of granularity of co-phase, (For Type II CSI codebook) Quantization level of the amplitude/phase of the combining coefficient(s), Number of reported coefficients or parameters associated with them; number of basis in the frequency domain, PMI granularity (e.g. R) for each CQI (channel quality indicator), or the like.

In order to achieve the level of coarse value described above, the UE may report partial CSI (partial CSI) in which some CSI information (i.e., CSI contents) is omitted. As an example, for Type II CSI codebook in Rel-15, the PMI reported by the UE may be the PMI for an even subband (SB) or the PMI for an odd subband. As another example, for the Type II CSI codebook in Rel-16, the UE may always report only CSI corresponding to group 0 and/or group 1, as shown in Table 6 below.

[Table 6]

| |
|---|
| - For Enhanced Type II reports, for a given CSI report $n$, each reported element of indices $i_{2,4,l}$ $i_{2,5,l}$ and $i_{1,7,l}$, indexed by $l,i$ and $f$, is associated with a priority value $Pri(l,i,f) = 2 \cdot L \cdot \upsilon \cdot \pi(f) + \upsilon \cdot i + l$, with $$\pi(f) = \min\left(2 \cdot n_{3,l}^{(f)}, 2 \cdot \left(N_3 - n_{3,l}^{(f)}\right) - 1\right)$$ with $l = 1,2, \dots , \upsilon$, $i = 0,1, \dots , 2L - 1$, and $f = 0,1, \dots, M_{\upsilon}-1$, and where $n_{3,l}^{(f)}$ is defined in Clause 5.2.2.2.5. The element with the highest priority has the lowest associated value $Pri(l,i,f)$. Omission of Part 2 CSI is according to the priority order shown in Table 5.2.3-1, where <br> - Group 0 includes indices $i_{1,1}$ (if reported), $i_{1,2}$ (if reported) and $i_{1,8,l}$ ($l = 1, \dots , v$). |

(continued)

- Group 1 includes indices $i_{1,5}$ (if reported), $i_{1,6,l}$ (if reported), the $\upsilon 2LM_{\upsilon} - \lfloor K^{NZ}/2 \rfloor$ highest priority elements of $i_{1,7,l}$, $i_{2,3,l}$, the $\left\lceil \frac{K^{NZ}}{2} \right\rceil - \upsilon$ highest priority elements of $i_{2,4,l}$ and the $\left\lceil \frac{K^{NZ}}{2} \right\rceil - \upsilon$ highest priority elements of $i_{2,5,l}$ ($l = 1, \dots , \upsilon$).

- Group 2 includes the $\lfloor K^{NZ}/2 \rfloor$ lowest priority elements of $i_{1,7,l}$, the $\left\lceil \frac{K^{NZ}}{2} \right\rceil$ lowest priority elements of $i_{2,4,l}$ and the $\left\lceil \frac{K^{NZ}}{2} \right\rceil$ lowest priority elements of $i_{2,5,l}$ ($l = 1, \dots , \upsilon$).

Additionally, in a manner different from the above-described methods (e.g., Example 1-1, Example 1-2), joint AI/ML-based CSI compression between the UE and the base station may be considered. In this case, only the specific parameters or parts reported may be used for joint AI/ML, and the remaining CSI may be reported to the base station through the existing method (i.e. legacy method).

For example, in the case of two part CSI (i.e., if the CSI consists of part 1 CSI and part 2 CSI), a method of reporting compressed CSI using the AL/ML of the UE and/or base station may be considered for only either part 1 CSI or part 2 CSI. As an example, the meaning of compression may refer to a method of compressing the CSI previously calculated by the UE using an AL/ML algorithm such as an auto encoder, and reporting the CSI using a small payload through compression.

The above example method can be extended and applied to the Type II CSI codebook. A Tyep II CSI codebook (e.g., Type II CSI codebook in Rel-16/17) may be composed of components such as a spatial domain index, frequency domain index, and combining coefficient. As an example, considering the structure of W=W1*W_tilde*W_F^H, the spatial domain index is associated with W1, W_F is associated with the frequency domain index, and the combination coefficient (i.e., combination index) may refer to a matrix composed of coefficients combining a spatial domain index and a frequency domain index. Here, the index may be a specific vector (e.g., an oversampled DFT vector) or may consist of a port indicator connected to the port.

In the case of a method using joint AI/ML-based CSI compression between the above-described UE and base station, a method of compressing and transmitting/reporting at least one characteristic element (i.e., component) of the above-described codebook using AI/ML, and transmitting/reporting the remaining characteristic elements through an existing method (i.e., non-compressed method) may be considered. At this time, the corresponding CSI may be transmitted through the same container (e.g., PUCCH/PUSCH) or may be transmitted through a separate container.

For example, when transmitted through the same container, three-part CSI transmission may be considered, rather than the existing two-part CSI transmission. At this time, part 1 CSI determines the payload of part 2 CSI and part 3 CSI, and part 2 CSI determines the payload of part 3 CSI, so ambiguity regarding the size of transmitted CSI can be resolved. Considering this, CSI compressed using AI/ML based on prior promises/definitions may be transmitted as part 2 CSI or part 3 CSI. In particular, when the compression rate is dynamically adjusted, it may be desirable for the compressed CSI to be included in part 3 CSI.

As another example, if existing two part CSI transmission is used, part 1 CSI may include information about compression ratio and/or compressed (or non-compressed) elements. At this time, compressed CSI and non-compressed CSI may be included and transmitted in part 2 CSI.

Additionally, in an NR wireless communication system (e.g., a Rel-18 based NR wireless communication system), not only compression in the spatial domain/frequency domain but also compression in the time domain can be considered. In this case, similar to the above-mentioned example, the UE may distinguish compressed elements and non-compressed elements and report compressed CSI and non-compressed CSI to the base station based on AI/ML. Additionally/alternatively, for flexibility of the base station AI/ML, the elements/parts subject to compression may be configured/provided by the base station. Here, compression may be based on the AI/ML-based compression method described above or an existing compression method (e.g., vector projection method).

In relation to the above-described content in an embodiment of the present disclosure, an AI/ML-based feedback overhead reduction method will be described in detail.

Regarding feedback payload overhead reduction, one common AI model may be based on compression on the UE and/or base station side. For example, a case where a CSI encoder exists on the UE side and a CSI decoder exists on the base station side may be considered. Here, the CSI encoder and CSI decoder may be closely related to an auto encoder, and a convolutional neural network (CNN) may be utilized to efficiently reduce the size/dimension of the channel. As an example, the UE may generate CSI report/feedback information through a CSI encoder for the results of measurement/estimation for a channel (e.g., H), and transmit the generated CSI report/feedback information to the base station. The base station decodes the received CSI report/feedback information through a CSI decoder, and UE identify channel information (e.g. H_tilde) through this.

The UE may measure the channel and interference based on a reference resource (e.g., CSI-RS), and may calculate CSI (e.g. RI/CQI/PMI/CRI/LI, etc.) based on the measured value and the codebook configured by the base station. Like this, a method of reporting to information that may represent the channel (e.g. RI/CQI/PMI/CRI/LI, etc.) without transmitting explicit channel information (e.g. raw channel matrix, channel covariance matrix) may be referred to as an implicit feedback method. In general wireless communication systems (e.g., LTE system, NR system), the implicit feedback method is applied.

Hereinafter, methods to improve feedback performance by applying AI/ML methods to CSI feedback considering the implicit feedback method will be proposed.

As described above, the NR wireless communication system supports CSI of the Type I CSI method (i.e., the Type I CSI codebook described above) and the Type II CSI method (i.e., the Type II CSI codebook described above).

In the case of Type I CSI method, PMI may be constructed through in-phase operations connecting each pol, by considering the cross-polarization antenna and the portion selected from a number of candidate DFT vectors using a DFT vector representing the spatial (SD) basis. Therefore, the Type I CSI method has a relatively simple structure, has the advantage of having a small payload, and may be used for SU (single user)-MIMO. On the other hand, in the case of the Type II CSI method, the optimal PMI is constructed by linear combining a plurality of DFT vectors that are SD basis. The number of combining coefficients increases, and a large payload may be required in the process of quantizing the corresponding combining coefficients (i.e., quantizing the phase coefficient and amplitude coefficient). Accordingly, compared to the Type I CSI method, there is a disadvantage in that the required payload is large, but since the measured channel may be expressed relatively accurately, it may be used for MU (multi user)-MIMO. In the following methods, the case where AI/ML is applied to the Type II CSI method is considered.

For example, with regard to codebook construction based on linear combining, some or all of each configuration parameter/factor is calculated/generated based on AI/ML, and the remaining configuration parameters/factors may be calculated/generated according to existing methods and reported to the base station. In other words, with regard to CSI, the UE may report to the base station the parameters/factor(s) calculated/generated based on the AI/ML method and the parameter/factor(s) calculated/generated based on the existing method.

In relation to this method, a codebook construction method predefined in the standard (e.g., refer to 3GPP TS 38.214 clause 5.2.2.2 Precoding matrix indicator (PMI)) may be applied.

Here, the construction/configuration parameters/factors may include spatial domain (SD) basis, frequency domain (FD) basis, time domain (TD)/Doppler domain (DD) basis, and/or quantization for amplitude/phase.

The SD basis may be a base suitable for a 1D/2D antenna array provided by the base station, and 1D/2D DFT vectors are used in the existing codebook. For example, the DFT vector structure may be suitable as the antenna ports of the base station are spaced at regular intervals, and even when expanded to a 2D antenna array, it may be expanded through the Kronecker porduct.

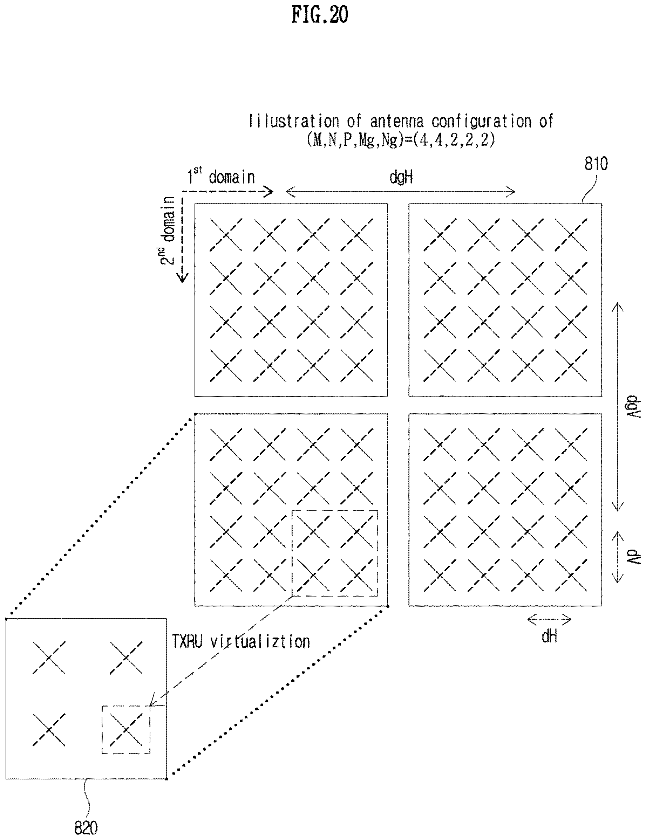

FIG. 20 illustrates an antenna configuration and a port configuration in a panel in a wireless communication system to which the present disclosure may be applied.

Referring to FIG. 20, the antenna configuration 810 may be configured for the first domain and the second domain, and TXRU virtualization may be applied in relation to the antenna configuration 810 in relation to the port configuration 820.

Regarding the antenna configuration 810, M means the number of columns in the panel (i.e., the number of antenna ports in the first domain in the panel), N means the number of rows in the panel (i.e., the number of antenna ports in the second domain in the panel), P means polarization (1: co-pol, 2: X-pol), Mg means the number of panels in the first domain, and Ng means the number of panels in the second domain. Accordingly, the total number of antenna elements may be expressed as P*M*N*Mg*Ng. As an example, the antenna configuration 810 shown in FIG. 8 corresponds to [(M, N, P, Mg, Ng) = (4, 4, 2, 2, 2)]. In Figure 8, dgH means the panel spacing in the first domain, dgV means the channel spacing in the second domain, and dH means the antenna spacing in the first domain, and dV means the antenna spacing in the second domain.

Regarding panel configuration 820, $N_1$ means the number of columns in the first domain (i.e., the number of antenna ports in the first domain in the panel), $N_2$ means the number of rows in the second domain (i.e., the number of antenna ports in the second domain in the panel), and P means polarization (1: co-pol, 2: X-pol). Accordingly, the total number of CSI-RS ports in the panel may be expressed as $P*N_1*N_2$. As an example, the panel configuration 820 shown in FIG. 8 corresponds to [$(N_1, N_2, P) = (2, 2, 2)$].

For example, in the case of a single panel in the above-described example, The 2D-DFT beam (i.e., 2D-DFT vector) to be applied to the 2D antenna array within one panel may be defined as Equation 3.

[Equation 3]

$$\mathbf{w}_{m_1,m_2} = \frac{\mathbf{v}_{m_1} \otimes \mathbf{u}_{m_2}}{\sqrt{N_1 N_2}}$$

$$\mathbf{v}_{m_1} = \left[ 1 \quad \exp(j\frac{2\pi m_1}{o_1 N_1}) \quad \cdots \quad \exp(j\frac{2\pi m_1(N_1-1)}{o_1 N_1}) \right]^T$$

$$\mathbf{u}_{m_2} = \left[ 1 \quad \exp(j\frac{2\pi m_2}{o_2 N_2}) \quad \cdots \quad \exp(j\frac{2\pi m_2(N_2-1)}{o_2 N_2}) \right]^T$$

In Equation 3, $m_1$ and $m_2$ represent the index of the 1D-DFT vector of the first domain and the index of the 1D-DFT vector of the second domain, respectively, and may be defined as the DFT vector corresponding to the antenna corresponding to one polarization. $N_1$ and $N_2$ represent the number of antenna ports per pole (pol) in the first domain and second domain in the panel, respectively, and may be replaced with N and M in FIG. 20. $o_1$ and $o_2$ represent oversampling factors in the first and second domains in the panel, respectively.

As described above, SD basis(s) may be defined based on base station antenna configuration information and codebook configuration information (e.g., oversampling information) configured by the base station, Among the SD basis(s) configured in this way, the UE may select a preferred SD basis according to the type of codebook being configured. $N_1$ and $N_2$ may be information based on the base station shape, and the base station may configure/indicate a specific oversampling factor to the UE in order to improve SD-based granularity.

In addition, cases where it is difficult to specify a specific SD basis with a DFT basis expression, such as an antenna and a cylinder-shaped antenna, may also be considered.

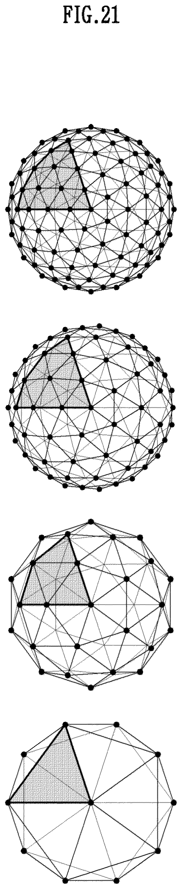

FIG. 21 illustrates a spherical antenna layout in a wireless communication system to which the present disclosure may be applied.

Referring to FIG. 21, in the case of a spherical antenna layout implemented in three dimensions (3D), it may be difficult to specify the SD basis using the DFT basis. In FIG. 21, each point represents an antenna port, and the line connecting each point represents the distance between antenna ports.

In this case, a codebook that calculates the distance difference between antenna ports and reflects the calculated result may be considered. However, the method of calculating the distance difference between antenna ports may be very complicated, and, unlike FIG. 21, may be even more complicated if the positions of the antenna ports are not uniform. Therefore, in such cases, it may be efficient to calculate the preferred SD basis of the UE based on the AI/ML described above.

In the case of the method described/proposed in the embodiment of the present disclosure, it is explained/proposed for the linear combining-based Type II CSI codebook (i.e., Type II CSI codebook), but it may also be applied to other types of codebooks in which the SD basis is used (e.g., Type I CSI codebook).

The above-described SD basis is a CSI component of wideband (WB) properties that is configured in common frequency.

In addition, the FD basis may be used as a basis to indicate how much a specific SD DFT vector selected through the SD basis changes (i.e., the amount of change) in the reporting subband band configured by the base station. Similarly, in the time domain, when a given specific SD DFT vector comes in (i.e., is received) through each multi-path, it may be received by the UE with a single or multiple time delays (t). At this time, if the time delay (t) is converted to an axis in the frequency domain (i.e., FFT), this may be converted into a phase conversion factor (-j*2*pi*t*k) of a specific k-th subband (SB), and may be mapped to the phase change amount of the k-th element of the FD basis.

As an example, in the case of a Type II CSI method (e.g., Rel-16 Type II CSI) including the above-described FD basis, it may be expressed as $W=W_{SD}*W_C*W_{FD}^H$. Here, $W_{SD}$ represents the SD basis matrix, $W_c$ represents the combination coefficient matrix, and $W_{FD}$ represents the FD basis matrix.

Additionally, similar to the FD basis described above, the TD/DD basis may be used as a basis representing the amount of change in phase components in the time domain per given SD basis and/or FD basis. As an example, in the case of a TD basis that is commonly selected for all SD/FD basis, W may be expressed as $\left(W_{FD}^* \otimes W_{SD}\right) W_c W_{TD}^{\mathrm{H}}$. Additionally, in the case of a DD basis that is commonly selected for all SD/FD basis, W may be expressed as $W_{SD} W_c (W_{FD} \otimes W_{DD})^H$. Here, $W_{TD}$ represents the TD basis matrix and $W_{DD}$ represents the DD basis matrix.

Therefore, according to the manner described/proposed in the embodiments of the present disclosure, the UE may be configured/defined to report the results/output values of the AI/ML-based algorithm/model as new CSI contents to the base station, by applying AI/ML-based algorithms/models to matrices of specific $W_{SD}$, $W_c$, $W_{FD}$, and/or $W_{TD}$/$W_{DD}$ in a linear combination codebook structure. At this time, the base station may configure/indicate the UE with information on which factors/components are calculated using an AI/ML-based algorithm/model.

For example, a case where the base station sets the Rel-16 Type II CSI method to the UE and configures/indicates the UE to calculate the SD basis (i.e., $W_{SD}$) using an AI/ML-based algorithm/model may be considered. In this case, $W_{SD}$ may be calculated through AI/ML-based calculations (e.g., AI/ML model inference), and the remaining $W_c$ and $W_{FD}$^H may be configured using existing codebook construction methods. As another example, a case where CSI reporting based on time domain compression such as $\left(W_{FD}^* \otimes W_{SD}\right) W_c W_{TD}^{\mathrm{H}}$ is configured and the base station configures/indicates to calculate the FD/SD basis (i.e., $W_{FD}$/$W_{SD}$) using an AI/ML-based algorithm/model may also be considered. In this case, $W_{FD}$/$W_{SD}$ may be reported through AI/ML-based calculations, and the remaining $W_c$ and $W_{TD}$^H may be configured using existing codebook construction methods.

The above-mentioned AI/ML-based reporting may be reported independently or may be reported in a form combined with a legacy codebook, such as the method proposed/described in the embodiment of the present disclosure. In particular, when the base station configures reporting on multiple matrices, the payload may be reduced through compression based on AI/ML methods. In the above example, the UE may compress $W_{FD}$ and $W_{SD}$ respectively and may report the information to the base station, or may compress the $W_{FD}^* \otimes W_{SD}$ information itself and report it to the base station. In this case, there is only one AI/ML model inference required. Additionally, the above-described operation may be based on the settings of the base station, but the UE may make its own judgment, compress, and perform reporting. In this case, in order to prevent ambiguity with the base station, information on which matrix or matrix combination generated the CSI based on the AI/ML method may be reported to the base station.

Additionally, in the method proposed/described in the embodiments of the present disclosure, regarding the configuration parameters/factor(s) to which the AI/ML method is applied among the configuration parameters/factors that construct the codebook, a format different from AI/ML-based calculation and existing codebook construction methods (e.g., bit-width) may be used. To this end, the base station may configure configuration information for the two formats to the terminal for each codebook configuration parameter/factor or in common. Here, the two formats may correspond to an AI/ML-based format and a non-AI/ML-based format (i.e., existing format).

Embodiment 2

This embodiment relates to a method of configuring/defining separate reporting contents and reporting them for AI/ML-based training and/or inference.

For example, the UE may configure separate CSI content based on a prior agreement and/or configurations of the base station, and report the configured CSI content to the base station, by considering the CSI reporting method in Embodiment 1 described above.

For existing NR wireless communication systems, the base station may configure multiple beams (e.g., SSB, CSI-RS, etc.) to the UE, and the UE may perform measurements on the configured beams and report the index(s) of the preferred beam and single or multiple measurement values (e.g., RSRP, SINR, etc.) for the index to the base station. At this time, if the base station receives information on the corresponding beam or predictable information from the UE in advance, the base station may precisely configure the beam(s) to the UE. Through this, the measurement performance of the UE may be improved and the number of beams to be configured may be saved, which has the advantage of reducing signaling overhead.

Therefore, the base station may use AI/ML method to predict the preferred beam of the UE and the UE may report information on the direction and strength of the received beam to the base station in order to help the AI/ML of the base station.

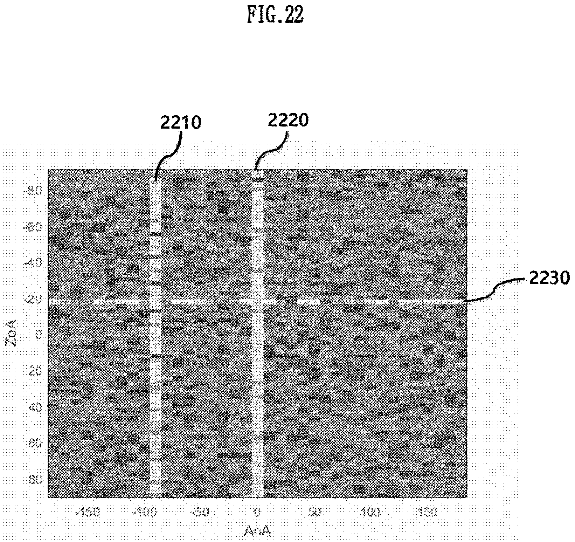

FIG. 22 illustrates 2D bitmap information for reporting the direction and strength of a beam in a wireless communication system to which the present disclosure may be applied.

Referring to FIG. 22, with regard to information reported by the UE, the direction information of the beam received by the UE and the corresponding beam intensity information may be configured in the form of a bitmap. In order to effectively report the bitmap information, the base station may configure the size of the bitmap information to the UE.

For example, the base station may configure the range and/or granularity information of angle of arrival (AoA)/zenith angle of arrival (ZoA) to the UE. Referring to FIG. 22, a case where the range of AoA is -180 to 180 deg (i.e., degree), the range of ZoA is -90 to 90 deg, and the granularity is 1 deg may be considered. At this time, it is assumed that specific parts 2210, 2220, and 2230 in the bitmap information correspond to higher RSRP/SINR compared to other parts.

If the UE reports all of the corresponding bitmap information (i.e., bitmap information as in FIG. 22), signaling overhead may be very large. Therefore, with regard to the bitmap information to be reported by the terminal, the range of AoA may be set to N1 to N2 deg, the range of ZoA may be set to M1 to M2 deg, and the granularity of each domain may be set to X deg/Y deg. Here, the base station may set some or all of the values of N1, N2, M1, M2, X, and Y to the UE.

The corresponding AoA and ZoA may be converted to the index of the (pre-configured) DFT vector (horizontal DFR/vertical DFT) and reported. Additionally, in order to determine the strength of RSRP/SINR, the UE may configure/use pre-configured granularity and report to the base station using a (hard-)bitmap of 0 or 1. At this time, in order to (hard-)determine RSRP/SINR in a specific direction, the base station may configure a specific threshold to the UE. The unit in which 2D bitmap information as shown in FIG. 22 is reported may be wideband (WB)/subband (SB)/subband group/PRB group, and the unit may be configured/indicated to the UE by the base station.

Additionally, as shown in FIG. 22, depending on the environment of the UE, the direction in which SINR/RSRP is measured to be high may be limited, and may be more limited when beamforming is used in an ultra-high frequency environment (e.g., mmWave environment). In this case, it may be inefficient for the UE to report the entire contents of the bitmap information as is, and it may be efficient to compress and transmit the bitmap information. At this time, for effective compression, the UE and base station may use the AI/ML method. As an example, the UE may compress and transmit bitmap information using an auto encoder, and the base station may decode the bitmap information.

Additionally, in relation to embodiments of the present disclosure, a two-step operation may be considered for effective reporting operation. For example, in the first step, the UE may be configured to report coarse RSRP/SINR information to the base station, and in the second step, the UE may be configured to report fine RSRP/SINR information to the base station.

Additionally, with regard to embodiments of the present disclosure, in the case of CSI for training purposes, the report quantity information may be set to no report (e.g. "None") or a specific report quantity (e.g. "Training") in a CSI reporting configuration. Additionally/alternatively, in the case of CSI for inference purposes, the report quantity information may be set differently to a specific report quantity (e.g. "Inference", "AI/ML").

Additionally, with regard to embodiments of the present disclosure, in the case of the PMI format indicator and/or the CQI format indicator, either a wideband (WB) value or a subband (SB) value may be indicated to the UE. For CSI reporting for training (of the base station) or AI/ML, one may not expect configurations for the PMI/CQI format indicator as described above. Additionally/alternatively, when using a separate format indicator (e.g. training/inference) or using a subband, but using it for training or inference purposes, it may be configured by reinterpreting the subband table in the existing standard or by adding a column for the subband.

Table 7 illustrates configurable subband sizes defined in the standard.

[Table 7]

| Bandwidth Part (PRBs) | Subband size (PRBs) |
| --- | --- |
| 24 - 72 | 4, 8 |
| 73 - 144 | 8, 16 |
| 145 - 275 | 16, 32 |

Referring to Table 7, when the configure BWP is 50, the subband size may be set to 4 or 8 through RRC signaling. In the case of CSI reporting configurations for training or inference, the UE may ignore the pre-set value and use a prearranged value (e.g., 1).

Additionally, with regard to embodiments of the present disclosure, in the case of CSI transmitted from a UE for AI/ML (i.e., CSI for AI/ML purposes), it may have a higher priority than CSI for channel measurement reporting purposes. That is, when CSI drop/omission, etc. is performed, CSI transmitted for the AI/ML method in the UE or the AI/ML method in the base station (i.e., CSI for AI/ML purposes) may have a higher priority compared to other CSIs, that is, CSIs for existing channel measurement purposes.

Additionally, in relation to embodiments of the present disclosure, in the case of CSI reporting for AI/ML purposes, CSI omission, etc. may not be performed. CSI omission refers to a method of reporting by omitting a specific CSI when the capacity of the CSI reporting channel of the UE configured by the base station is larger. The method of omitting CSI may be determined based on rules defined in the standard and priorities between CSI elements. When using the AI/ML method in the UE, the definition of CSI omission needs to be newly defined. In other words, the UE may use the AI/ML method to calculate/compress/omit CSI optimized for the capacity of the CSI reporting channel configured by the base station and report the CSI. In order to smoothly decode the CSI transmitted by the UE at the base station, the UE may additionally report compression-related information (e.g., compression rate, priority, etc.) along with the CSI. Alternatively, as in the above-described embodiment, the UE may report/transmit CSI by selectively compressing specific codebook components, and may also report information related to the selection to the base station.

In the case of the above-described proposed methods in the embodiments of the present disclosure, they may be applied/implemented alone or in combination of two or more.

Additionally, as described above, when a network/base station with AI/ML methods or a network/base station with advanced performance (through other means) is implemented, dynamic optimization of interference/traffic, etc. may be possible through real-time cooperation and/or integrated control between base stations. The proposed methods described above in embodiments of the present disclosure may relate to resource control and CSI-related signaling methods related to such optimization.

In addition, in relation to the AI/ML method in the base station and/or the AI/ML method in the UE described above in the present disclosure, the UE may report a buffer status report (BSR) at a specific future time to the base station.

BSR refers to MAC-CE information for informing the UE of the amount of UL data to be transmitted to the base station. If there are available resources, the base station that received the BSR may indicate the UE to provide a UL grant for UL data transmission, and the UE may perform UL transmission through this indication.

If the UE may predict information on available UL data at a future point in time based on AI/ML methods (e.g., prediction through methods such as regression), the UE may report prediction information to the base station. The base station may pre-calculate information for UE scheduling (in the future) through this information, and has the advantage of being able to use it for network energy saving purposes.

In the case of BSR reporting at a future time as described above, the UE may be configured to report buffer size information corresponding to the index to the base station, by introducing a specific time index as shown in FIG. 22.

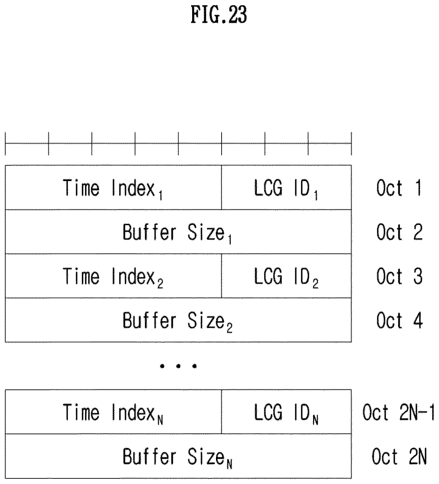

FIG. 23 illustrates AI/ML-based BSR information in a wireless communication system to which the present disclosure may be applied.

Referring to FIG. 23, the LCG ID field is used to identify the logical channel group for which the buffer status is reported, and has a field length of 3 bits. LCG ID and buffer size information may be configured for each time index, and the UE may be configured to report buffer size information corresponding to the time index to the base station.

Alternatively, a method of defining a specific window, prearranging/setting a uniform or non-uniform time within that window, and sequentially reporting the BSR may also be considered. For example, considering the case of a uniform time window in BSR reporting for a window size m corresponding to a future point in time, if the window size (m) is 5, the time window is n+1, n+2, n+3, n+4, n+5 slots or n+1*x, n+2*x, n+3*x, n+4*x, n+5*x slots from the triggering point n (where x is an integer value). Alternatively, considering the case of a non-uniform time window, the time window may include n+1*x, n+2*x, n+4*x, n+6*x, n+9*x, etc. from the triggering point n. Information on the corresponding non-uniform time window may be promised in advance or configured by the base station, etc. The unit of the time window may be a symbol, a slot, or a certain time unit (msec).

The above-described BSR reporting may be performed through MAC-CE as in the existing method, but BSR may be reported to the base station through physical layer signaling (i.e., layer-1 signaling) in the form of one CSI content. That is, BSR information (e.g., single or multiple time-related information, information on the corresponding buffer size) may be reported to the base station through PUCCH or PUSCH. At this time, for the buffer size, Table values defined in the standard (e.g., Tables 6.1.3.1-1, 6.1.3.1-2 of 3GPP TS 38.321) may be reused, or values for AI/ML-based operations may be newly defined and used.

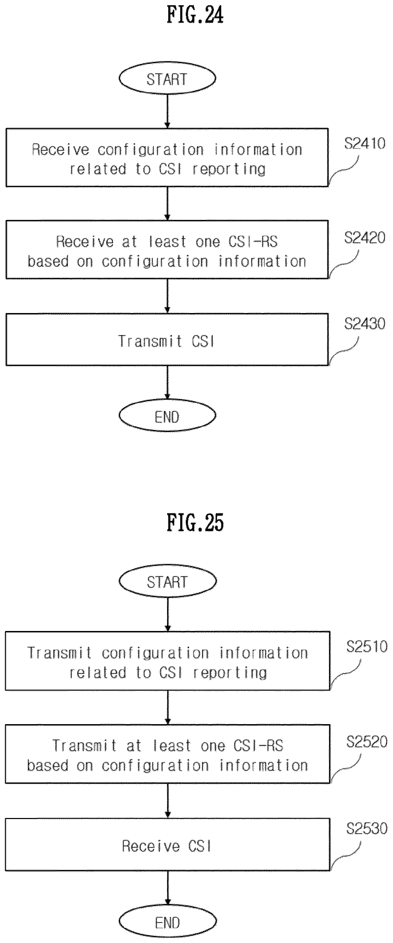

FIG. 24 is a diagram illustrating an operation of a user equipment for a method for reporting channel state information according to an embodiment of the present disclosure.

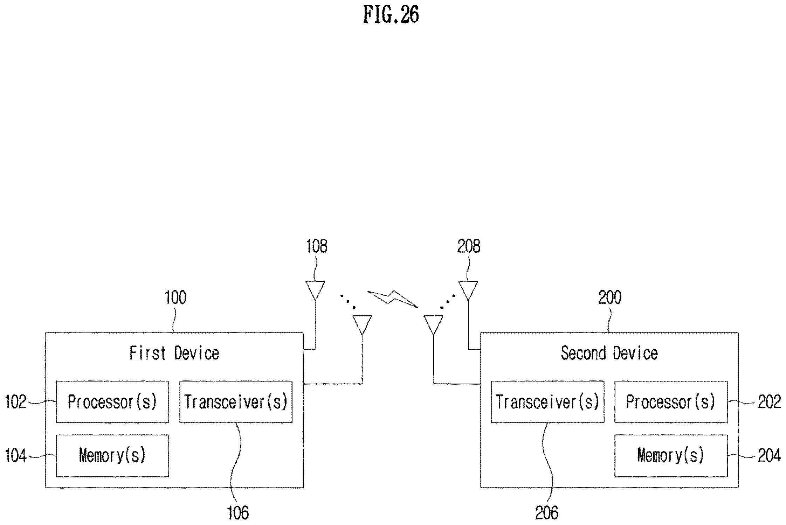

FIG. 24 illustrates the operation of a UE based on the previously proposed method (e.g., a method of configuring AI/ML-related reporting above described, any one or a combination of embodiment 1, embodiment 2, and detailed embodiments thereof). The example in FIG. 24 is for convenience of explanation and does not limit the scope of the present disclosure. Some step(s) illustrated in FIG. 24 may be omitted depending on the situation and/or setting. Additionally, the UE in FIG. 24 is only an example and may be implemented as a device illustrated in FIG. 26 below. For example, the processor 102/202 of FIG. 26 may control to transmit or receive channel/signal/data/information, etc. using the transceiver 106/206 and may control to store received channels/signals/data/information, etc. in the memory 104/204.

Additionally, the operations of FIG. 24 may be processed by one or more processors 102, 202 of FIG. 26, and the operation of FIG. 24 is stored in memory (e.g., one or more memories 104, 204 of FIG. 26) in the form of instructions/programs (e.g., instructions, executable code) for driving at least one processor (e.g., 102, 202) of FIG. 26.

Referring to FIG. 24, in step S2410, the UE may receive configuration information related to CSI reporting from the base station.

For example, the UE may receive CSI configuration information based on the methods proposed in embodiments of the present disclosure from the base station. As an example, the configuration information may correspond to specific CSI configuration information for training or inference based on a specific learning algorithm. That is, the configuration information may be configured separately from general CSI configuration information (i.e., CSI configuration information for channel measurement/estimate reporting).

At this time, the specific CSI configuration information may be configured as report quantity information indicating either the training or the inference.

In other words, the above-described configuration information may be used to provide information for configuring parameters/factors related to CSI based on AI/ML method, and may be embodied by the methods in the embodiments of the present disclosure described above.

In addition, the configuration information may include information on CSI-RS resources (e.g., CRI, etc.) for AI/ML reporting, and the method of configuring information on CSI-RS resources may be similar to the method of configuring CSI-RS resources for existing CSI.

In step S2420, the UE may receive at least one CSI-RS from the base station based on the configuration information. Additionally, in step S2430, the UE may transmit/report the CSI calculated/determined based on the at least one CSI-RS to the base station.

Here, the CSI may include a number of parameters (i.e., CSI-related parameters/factors) according to the above-described configuration information. At this time, at least one parameter among the plurality of parameters may be determined based on a specific learning algorithm. For example, as with the methods proposed in embodiments of the present disclosure, the plurality of parameters may correspond to components/parameters/factors related to Type I CSI codebook/Type II CSI codebook and/or 2 part CSI method.

For example, the CSI includes a plurality of partial CSI (e.g., first partial CSI (part 1 CSI) / second partial CSI (part 2 CSI) / third partial CSI (part 3 CSI), etc.). At this time, one partial CSI among a plurality of partial CSI may be compressed using the specific learning algorithm. In this regard, the remaining portion of the CSI may include information on the compression rate based on the specific learning algorithm. Additionally, the at least one parameter (i.e., a parameter determined based on the specific learning algorithm described above) may be included in one partial CSI that is compressed using the specific learning algorithm. Additionally, the remaining partial CSI may include information (e.g., index, set index, etc.) indicating/distinguishing the at least one parameter among the plurality of parameters.

In addition, as the methods proposed in the embodiments of the present disclosure, the at least one parameter may correspond to bitmap information (e.g., bitmap information in FIG. 22) for one or more measurement information/values (e.g., RSRP or SINR) corresponding to a CSI-RS index (e.g., beam-related RS index). In this regard, the UE may receive, from the base station, at least one of information on a range (e.g., range/value of AoA/ZoA/granularity, etc.) related to the bitmap information or information on a reporting unit (e.g., symbol/slot/msec, etc.) of the bitmap information.

In addition, as the methods proposed in the embodiments of the present disclosure, if CSI drop/omission is performed, the CSI may be configured/defined to have a higher priority than the CSI according to CSI configuration information for channel measurement reporting (i.e., existing CSI) .

In addition, the contents of the operation and configurations described in FIG. 24 may be specified based on the method(s) proposed in the embodiments of the present disclosure described above.

FIG. 25 is a diagram illustrating an operation of a base station for a method for reporting channel state information according to an embodiment of the present disclosure.

FIG. 25 illustrates the operation of a base station based on the previously proposed method (e.g., a method of configuring AI/ML-related reporting above described, any one or a combination of embodiment 1, embodiment 2, and detailed embodiments thereof). The example in FIG. 25 is for convenience of explanation and does not limit the scope of the present disclosure. Some step(s) illustrated in FIG. 25 may be omitted depending on the situation and/or setting. Additionally, the base station in FIG. 25 is only an example and may be implemented as a device illustrated in FIG. 26 below. For example, the processor 102/202 of FIG. 26 may control to transmit or receive channel/signal/data/information, etc. using the transceiver 106/206 and may control to store received channels/signals/data/information, etc. in the memory 104/204.

Additionally, the operations of FIG. 25 may be processed by one or more processors 102, 202 of FIG. 26, and the operation of FIG. 25 is stored in memory (e.g., one or more memories 104, 204 of FIG. 26) in the form of instructions/programs (e.g., instructions, executable code) for driving at least one processor (e.g., 102, 202) of FIG. 26.

Referring to FIG. 25, in step S2510, the base station may transmit configuration information related to CSI reporting to the UE.

For example, the base station may transmit CSI configuration information based on the methods proposed in embodiments of the present disclosure to the UE. As an example, the configuration information may correspond to specific CSI configuration information for training or inference based on a specific learning algorithm. That is, the configuration information may be configured separately from general CSI configuration information (i.e., CSI configuration information for channel measurement/estimate reporting).

At this time, the specific CSI configuration information may be configured as report quantity information indicating either the training or the inference.

In other words, the above-described configuration information may be used to provide information for configuring parameters/factors related to CSI based on AI/ML method, and may be embodied by the methods in the embodiments of the present disclosure described above.

In addition, the configuration information may include information on CSI-RS resources (e.g., CRI, etc.) for AI/ML reporting, and the method of configuring information on CSI-RS resources may be similar to the method of configuring CSI-RS resources for existing CSI.

In step S2520, the base station may transmit at least one CSI-RS to the UE based on the configuration information. Additionally, in step S2530, the base station may receive the CSI calculated/determined based on the at least one CSI-RS from the UE.

Here, the CSI may include a number of parameters (i.e., CSI-related parameters/factors) according to the above-described configuration information. At this time, at least one parameter among the plurality of parameters may be determined based on a specific learning algorithm. For example, as with the methods proposed in embodiments of the present disclosure, the plurality of parameters may correspond to components/parameters/factors related to Type I CSI codebook/Type II CSI codebook and/or 2 part CSI method.

For example, the CSI includes a plurality of partial CSI (e.g., first partial CSI (part 1 CSI) / second partial CSI (part 2 CSI) / third partial CSI (part 3 CSI), etc.). At this time, one partial CSI among a plurality of partial CSI may be compressed using the specific learning algorithm. In this regard, the remaining portion of the CSI may include information on the compression rate based on the specific learning algorithm. Additionally, the at least one parameter (i.e., a parameter determined based on the specific learning algorithm described above) may be included in one partial CSI that is compressed using the specific learning algorithm. Additionally, the remaining partial CSI may include information (e.g., index, set index, etc.) indicating/distinguishing the at least one parameter among the plurality of parameters.

In addition, as the methods proposed in the embodiments of the present disclosure, the at least one parameter may correspond to bitmap information (e.g., bitmap information in FIG. 22) for one or more measurement information/values (e.g., RSRP or SINR) corresponding to a CSI-RS index (e.g., beam-related RS index). In this regard, the UE may receive, from the base station, at least one of information on a range (e.g., range/value of AoA/ZoA/granularity, etc.) related to the bitmap information or information on a reporting unit (e.g., symbol/slot/msec, etc.) of the bitmap information.

In addition, as the methods proposed in the embodiments of the present disclosure, if CSI drop/omission is performed, the CSI may be configured/defined to have a higher priority than the CSI according to CSI configuration information for channel measurement reporting (i.e., existing CSI) .

In addition, the contents of the operation and configurations described in FIG. 25 may be specified based on the method(s) proposed in the embodiments of the present disclosure described above.

General Device to which the Present Disclosure may be applied

FIG. 26 illustrates a block diagram of a wireless communication device according to an embodiment of the present disclosure.

In reference to FIG. 26, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device XXX, YYY of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN (personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for performing channel state information (CSI) reporting by a user equipment (UE) in a wireless communication system, the method comprising:

   receiving, from a base station, configuration information related to the CSI reporting;
   receiving, from the base station, at least one CSI-reference signal (CSI-RS) based on the configuration information; and
   transmitting, to the base station, CSI calculated based on the at least one CSI-RS,
   wherein the CSI includes a plurality of parameters according to the configuration information, and
   wherein at least one parameter among the plurality of parameters is determined based on a specific learning algorithm.

2. The method of claim 1,
   wherein the configuration information corresponds to specific CSI configuration information for training or inference based on the specific learning algorithm.

3. The method of claim 2,
   wherein the specific CSI configuration information is configured as report quantity information indicating either the training or the inference.

4. The method of claim 1,

   wherein the CSI includes a plurality of partial CSI, and
   wherein one partial CSI among the plurality of partial CSI is compressed using the specific learning algorithm.

5. The method of claim 4,
   wherein remaining partial CSI among the plurality of partial CSI includes information on aompression rate based on the specific learning alogrithm.

6. The method of claim 5,
   wherein the at least one parameter is included in the one partial CSI compressed using the specific learning algorithm.

7. The method of claim 6,
   wherein the remaining partial CSI includes information indicating the at least one parameter among the plurality of parameters.

8. The method of claim 1,
   wherein the at least one parameter corresponds to bitmap information on one or more measurement values corresponding to a CSI-RS index.

9. The method of claim 8, further comprising:
   receiving, from the base station, information on at least one of a range related to the bitmap information or a reporting unit of the bitmap information.

10. The method of claim 1,
    wherein, based on CSI omission being performed, the CSI has higher priority than CSI according to CSI configuration information for channel measurement reporting.

11. A user equipment (UE) for performing channel state information (CSI) reporting in a wireless communication system, the UE comprising:

    at least one transceiver; and
    at least one processor coupled with the at least one transceiver,
    wherein the at least one processor is configured to:

    receive, from a base station, configuration information related to the CSI reporting;
    receive, from the base station, at least one CSI-reference signal (CSI-RS) based on the configuration information; and

transmit, to the base station, CSI calculated based on the at least one CSI-RS,

wherein the CSI includes a plurality of parameters according to the configuration information, and

wherein at least one parameter among the plurality of parameters is determined based on a specific learning algorithm.

12. A method for receiving channel state information (CSI) reporting by a base station in a wireless communication system, the method comprising:

transmitting, to a user equipment (UE), configuration information related to the CSI reporting;

transmitting, to the UE, at least one CSI-reference signal (CSI-RS) based on the configuration information; and

receiving, from the UE, CSI calculated based on the at least one CSI-RS,

wherein the CSI includes a plurality of parameters according to the configuration information, and

wherein at least one parameter among the plurality of parameters is determined based on a specific learning algorithm.

13. A base station for receiving channel state information (CSI) reporting in a wireless communication system, the base station comprising:

at least one transceiver; and

at least one processor coupled with the at least one transceiver,

wherein the at least one processor is configured to:

transmit, to a user equipment (UE), configuration information related to the CSI reporting;

transmit, to the UE, at least one CSI-reference signal (CSI-RS) based on the configuration information; and

receive, from the UE, CSI calculated based on the at least one CSI-RS,

wherein the CSI includes a plurality of parameters according to the configuration information, and

wherein at least one parameter among the plurality of parameters is determined based on a specific learning algorithm.

14. A processing device configured to control a terminal in a wireless communication system, the processing device comprising:

at least one processor; and

at least one computer memory operatively coupled to the at least one processor and storing instructions for performing a method according to any one of claims 1 to 10 upon being executed by the at least one processor.

15. At least one non-transitory computer readable medium storing at least one instruction, wherein:

the at least one instruction executed by at least one processor controls a device to performs a method according to any one of claims 1 to 10 in a wireless communication system.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

## FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

Resource grid

A carrier
(up to 3300 subcarriers, i.e., 275 RBs)

A BWP

1 RB=12 subcarrier

1 RE

1 subcarrier

1 Symbol

k=0

l=0  · · · · ·

# FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601          S602        S603      S604        S605        S606         S607        S608

· DL/UL ACK/NACK
· UE CQI/PMI RI REPORT
  USING PUSCH AND PUCCH

FIG.7

## FIG.8

UE                                          Base station

Downlink scheduling — S1401

DCI for downlink scheduling (PDCCH) — S1402

Downlink data (PDSCH) — S1403

## FIG.9

UE                                          Base station

Uplink scheduling — S1501

DCI for uplink scheduling (PDCCH) — S1502

Uplink data (PUSCH) — S1503

FIG.10

FIG.11

Input layer      Hidden layer      Output layer

FIG.12

# FIG.13

Input image
36 × 36

4 feature maps

28 × 28

14 × 14

Convolution
(kernel:9×9×1)

Max pooling

# FIG.14

W    V

$x_1$  h1  $x'_1$

$x_2$  $x'_2$

h2

$x_3$  $x'_3$

Encoder    Decoder

Loss function: $\underset{W,V}{\operatorname{argmin}} \| x-g(f(x)) \|^2$ ,
where h = f(x) = Wx, x' = g(h) = Vh

# FIG.15

Feedback

Training data

11

20

15

Model training

Model
deployment
/update

13

Model
performance
feedback

14

40

16

Data
collection

12

Inference data

Model inference

Output

Actor

10

30

40

# FIG.16

End device partition
(partial AI operation/model)

Network partition
(partial AI operation/model)

Actor

Intermediate
data

Inference
outputs

End device

Network AI end device

## FIG.17

| UE | RAN node 1 | RAN node 2 | Network node |
|---|---|---|---|

1. Training data

1. Training data

2. Model training

3. Model deployment/update

4. Inference data

4. Inference data

5. Model inference

6. Model performance feedback

7. Action

8. Feedback

8. Feedback

## FIG.18

| UE | RAN node 1 | RAN node 2 |
|---|---|---|

1. Training data

1. Training data

2. Model training

3. Inference data

3. Inference data

4. Model inference

5. Action

6. Feedback

## FIG.19

UE                                          RAN node

1. Training data

2. Model training

3. Model deployment/update

4. Inference data

5. Model inference

6. Model performance feedback

7. Action

8. Feedback

# FIG.20

Illustration of antenna configuration of
(M,N,P,Mg,Ng)=(4,4,2,2,2)

FIG.21

FIG.22

## FIG.23

| | | |
|---|---|---|
| Time Index$_1$ | LCG ID$_1$ | Oct 1 |
| Buffer Size$_1$ | | Oct 2 |
| Time Index$_2$ | LCG ID$_2$ | Oct 3 |
| Buffer Size$_2$ | | Oct 4 |

. . .

| | | |
|---|---|---|
| Time Index$_N$ | LCG ID$_N$ | Oct 2N−1 |
| Buffer Size$_N$ | | Oct 2N |

# FIG.24

START

Receive configuration information related to CSI reporting — S2410

Receive at least one CSI-RS based on configuration information — S2420

Transmit CSI — S2430

END

# FIG.25

START

Transmit configuration information related to CSI reporting — S2510

Transmit at least one CSI-RS based on configuration information — S2520

Receive CSI — S2530

END

EP 4 439 994 A1

## FIG.26

| INTERNATIONAL SEARCH REPORT | International application No. |
|---|---|
| | **PCT/KR2022/017730** |

**A.      CLASSIFICATION OF SUBJECT MATTER**

**H04B 7/06**(2006.01)i; **H04B 7/0456**(2017.01)i; **H04B 17/309**(2015.01)i; **H04W 28/02**(2009.01)i; **H04W 24/08**(2009.01)i; **H04W 24/10**(2009.01)i; **H04W 72/04**(2009.01)i; **G06N 20/00**(2019.01)i

According to International Patent Classification (IPC) or to both national classification and IPC

**B.      FIELDS SEARCHED**

Minimum documentation searched (classification system followed by classification symbols)

H04B 7/06(2006.01); H04B 7/0413(2017.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(channel state information), CSI-RS(CSI-reference signal), 설정 정보 (configuration information), 파라미터들(parameters), 러닝 알고리즘(learning algorithm)

**C.      DOCUMENTS CONSIDERED TO BE RELEVANT**

| Category* | Citation of document, with indication, where appropriate, of the relevant passages | Relevant to claim No. |
|---|---|---|
| X | US 2021-0351885 A1 (SAMSUNG ELECTRONICS CO., LTD.) 11 November 2021 (2021-11-11) See paragraphs [0033]-[0191]; and claims 1-2. | 1,2,4-6,11-15 |
| Y | | 8-10 |
| A | | 3,7 |
| Y | KR 10-2020-0090849 A (SAMSUNG ELECTRONICS CO., LTD.) 29 July 2020 (2020-07-29) See paragraphs [0188]-[0210]. | 8,9 |
| Y | WO 2021-029702 A1 (LG ELECTRONICS INC.) 18 February 2021 (2021-02-18) See paragraphs [0032] and [0310]-[0340]. | 10 |
| A | CATT. On AI/ML study for physical layer in Rel-18. RP-212255, 3GPP TSG RAN Meeting #93-e. 06 September 2021. See pages 2-4. | 1-15 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 February 2023** | **10 February 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2022/017730**

### C. DOCUMENTS CONSIDERED TO BE RELEVANT

| Category* | Citation of document, with indication, where appropriate, of the relevant passages | Relevant to claim No. |
|---|---|---|
| A | KR 10-2018-0089535 A (SAMSUNG ELECTRONICS CO., LTD.) 08 August 2018 (2018-08-08)<br>See paragraphs [0007]-[0019] and [0125]-[0161]; claims 1, 3 and 6; and figure 6. | 1-15 |

Form PCT/ISA/210 (second sheet) (July 2022)

**INTERNATIONAL SEARCH REPORT**
**Information on patent family members**

International application No.

**PCT/KR2022/017730**

| Patent document cited in search report | | | Publication date (day/month/year) | Patent family member(s) | | | Publication date (day/month/year) |
|---|---|---|---|---|---|---|---|
| US | 2021-0351885 | A1 | 11 November 2021 | WO | 2020-213964 | A1 | 22 October 2020 |
| KR | 10-2020-0090849 | A | 29 July 2020 | CN | 111567081 | A | 21 August 2020 |
| | | | | EP | 3711344 | A1 | 23 September 2020 |
| | | | | US | 11050478 | B2 | 29 June 2021 |
| | | | | US | 2019-0190582 | A1 | 20 June 2019 |
| | | | | WO | 2019-124983 | A1 | 27 June 2019 |
| WO | 2021-029702 | A1 | 18 February 2021 | US | 2021-0051508 | A1 | 18 February 2021 |
| KR | 10-2018-0089535 | A | 08 August 2018 | CN | 108476049 | A | 31 August 2018 |
| | | | | CN | 108476049 | B | 14 May 2021 |
| | | | | CN | 113328772 | A | 31 August 2021 |
| | | | | EP | 3381136 | A1 | 03 October 2018 |
| | | | | EP | 3381136 | B1 | 29 September 2021 |
| | | | | EP | 3955474 | A1 | 16 February 2022 |
| | | | | US | 10298307 | B2 | 21 May 2019 |
| | | | | US | 10484070 | B2 | 19 November 2019 |
| | | | | US | 10673507 | B2 | 02 June 2020 |
| | | | | US | 2017-0195031 | A1 | 06 July 2017 |
| | | | | US | 2018-0278317 | A1 | 27 September 2018 |
| | | | | US | 2019-0273546 | A1 | 05 September 2019 |
| | | | | US | 2019-0273547 | A1 | 05 September 2019 |
| | | | | US | 9991942 | B2 | 05 June 2018 |
| | | | | WO | 2017-116209 | A1 | 06 July 2017 |

Form PCT/ISA/210 (patent family annex) (July 2022)